# EUROPÄISCHE PATENTSCHRIFT

(11) **EP 0 858 690 B1**
(45) Veröffentlichungstag und Bekanntmachung des Hinweises auf die Patenterteilung: **06.02.2002**
(21) Anmeldenummer: 96934707.9
(22) Anmeldetag: 16.10.1996
(51) Int. Cl.: H02K 3/40, H02K 3/48, H02K 41/02

(54) **VORRICHTUNG ZUM VERBINDEN DES ELEKTRISCH LEITFÄHIGEN MANTELS EINER LEITUNG MIT EINEM ERDLEITER**
DEVICE FOR CONNECTING THE ELECTRICALLY CONDUCTING JACKET OF A LINE TO AN EARTH LEAD
DISPOSITIF DE CONNEXION D'UNE ENVELOPPE ELECTRIQUEMENT CONDUCTRICE D'UN CABLE AVEC UN FIL DE MASSE

(30) Priorität: 30.10.1995 DE 19540442; 20.05.1996 DE 19620222
(43) Veröffentlichungstag der Anmeldung: 19.08.1998
(73) Patentinhaber: NKT Cables GmbH, 51063 Köln (DE); ThyssenKrupp Transrapid GmbH, 34127 Kassel (DE)
(72) Erfinder: FUNKEN, Peter, D-50226 Frechen (DE); HEINEN, Karl-Hans, D-50765 Köln (DE); VOGT, Jürgen, D-36132 Eiterfeld (DE); V. KUEPACH, Hermann, D-84036 Landshut (DE); LÖSER, Friedrich, D-85521 Riemerling (DE)
(74) Vertreter: Schaumburg, Thoenes & Thurn
(86) Internationale Anmeldenummer: EP9604495
(87) Internationale Veröffentlichungsnummer: WO9716881

(56) Entgegenhaltungen:
- AU-B- 491 934
- DE-A- 3 006 382
- DE-A- 3 309 051

## Beschreibung

Die Erfindung betrifft eine Vorrichtung zum Verbinden des elektrisch leitfähigen Mantels einer in die Nuten des Induktors eines Linearmotors eingelegten elektrischen Leitung mit einem Erdleiter.

Aus der DE-PS 30 06 382 ist bereits eine dreiphasige Wechselstromwicklung für den Induktor eines Linearmotors bekannt, bei der die Leitungen der einzelnen Wicklungsstränge in der Vorfertigung mechanisch miteinander fest verbunden und dann in die Nuten des Induktors eingelegt werden. Die mechanisch feste Verbindung kann dabei mittels Klammern realisiert werden, die die Leitungen an den Wickelköpfen zusammenhalten und gleichzeitig eine elektrische Verbindung der Leitungsmäntel mit einem Erdleiter herstellen, welcher längs des Induktors an den Wickelköpfen vorbeigeführt ist.

Die Aufgabe des Erdleiters besteht darin, den elektrisch leitfähigen Mantel der einzelnen Leitungen der dreiphasigen Wechselstromwicklung mit Erdpotential zu verbinden, um kapazitive Ladeströme abzuleiten, Erdschlüsse zu erfassen und eine Fehlerortung zu ermöglichen. Außerdem soll ein Gefährdungsschutz gegen Berührung der Leitungen gewährleistet sein.

Es hat sich aber gezeigt, daß die Verbindung des Erdleiters durch die beschriebene Klammerverbindung an den Wickelköpfen keinen beständig geringen Übergangswiderstand auch bei langzeitigem Betrieb der Dreiphasenwicklung gewährleistet, denn durch Umwelteinflüsse kann Korrosion an den Klemmstellen auftreten.

Es ist deshalb Aufgabe der Erfindung, eine Vorrichtung zum Verbinden des elektrisch leitfähigen Mantels einer elektrischen Leitung mit einem Erdleiter anzugeben, die weitgehend korrosionsfest ist und die Montage der Leitung nicht erschwert.

Die Erfindung löst diese Aufgabe durch eine die Leitung im Nutbereich über mehr als den halben Außenumfang umschließende Metallschale, deren Innendurchmesser geringfügig kleiner als der Außendurchmesser der Leitung ist und die in der jeweiligen Nut liegend am Induktor befestigbar ist.

Durch die Erfindung wird es möglich, die Leitung jeweils auf einem relativ langen Abschnitt über die Metallschale elektrisch zu kontaktieren, indem sie in die Metallschale eingelegt wird. Da der Innendurchmesser der Metallschale geringfügig kleiner als der Außendurchmesser der Leitung ist, ergibt sich ein fester Sitz der Metallschale auf dem Außenmantel der Leitung, so daß sie dann ggf. zusammen mit der in ihr liegenden Leitung in einer Nut des Induktors befestigt werden kann. Die Leitung wird in der Metallschale festgehalten, weil sie von ihr auf einem Umfangsabschnitt von mehr als 180° fest umschlossen ist. Diese Art der Montage ist unabhängig von einer elektrischen Verbindung der Metallschale mit dem Erdleiter.

Es ist auch möglich, die Leitung in die Metallschale einzulegen, nachdem diese in einer Nut des Induktors befestigt wurde.

Die Metallschale kann so lang wie die Nut sein. Wenn aber das eine Ende der Metallschale über die Nut in deren Längsrichtung etwas hinausragt, kann dort in sehr einfacher Weise ein Anschluß des Erdleiters hergestellt werden, wobei korrosionsbeständige Klemmschraubverbindungen oder auch Verschweißungen anwendbar sind. Letztere Anschlußart eignet sich besonders für eine Metallschale, die nicht über die Nut hinausragt bzw. auch kürzer als diese ist.

Die Metallschale kann in der Nut mit Schrauben oder Klemmelementen befestigt sein. Vorzugsweise ist sie aber federelastisch und hat nach außen gebogene Längskanten, deren Breite und Biegungswinkel so bemessen sind, daß sie sich beim Eindrücken in die Nut an deren Innenwänden verspreizen. Dadurch ist eine sehr einfache Montage der Metallschale mit der in ihr liegenden Leitung möglich, denn diese Einheit kann in die Nut hineingedrückt werden, wobei die beiden nach außen gebogenen Längskanten an den Innenwänden der Nut entlanggleiten und nach Ende des Eindrückvorganges durch die Elastizität der Metallschale auseinandergespreizt werden, so daß die Metallschale dann selbsttätig in der Nut unverdrehbar und unverschiebbar festsitzt und das Kabel entsprechend festhält.

Die Innenwände der Nut können Längsvertiefungen zur Aufnahme der Längskanten der Metallschale haben. Dadurch wird der feste Sitz der Metallschale in der Nut des Induktors weiter verbessert, denn beim Eindrücken der Metallschale in die Nut verrasten die Längskanten in deren Längsvertiefungen.

In der vorstehenden Ausführung wird der Sitz der Metallschale in der Nut des Induktors durch die federelastische Eigenschaft der Metallschale gewährleistet, denn diese verspreizt sich in der Nut. Es ist aber auch möglich, die Metallschale ohne diese Federeigenschaft in der Nut zu verankern, wobei die Außenkontur der Metallschale der Innenkontur der Nut entspricht. In diesem Fall kann die Metallschale gut passend von der Stirnseite des Induktors her in die Nut eingeschoben werden.

Die Nuten des Induktors können mit einem Kunststoff ausgekleidet sein. Dies ermöglicht eine gute Anpassung der Nutenkontur an die Kontur der Metallschale. Der Kunststoff kann in die Nuten eingespritzt werden.

Die Vorrichtung kann auch ein die Metallschale aufnehmendes, in die Nut einsetzbares und in dieser befestigbares Formteil umfassen, dessen Innenkontur der Außenkontur der Metallschale entspricht. Ein solches Formteil kann z.B. als ein Kunststoff-Spritzteil ausgebildet sein, das vor oder auch nach dem Befestigen der Metallschale in den Induktor eingesetzt wird. Dies bietet den Vorteil, daß Formteile unterschiedlicher Art für Leitungen unterschiedlichen Durchmessers und/oder Materials vorgesehen sein können, die in gleichartig ausgebildete Nuten des Induktors eingesetzt werden können.

Vorteilhaft sind auch bei der Verwendung einer Kunststoffauskleidung bzw. eines Formteils an der Metallschale nach außen gebogene Längskanten vorgesehen, die an inneren Längskanten des Formteils verrasten.

Damit das Formteil unverdrehbar in der Nut des Induktors festsitzt, kann es mindestens einen äußeren Längsvorsprung und/oder mindestens eine äußere Längsvertiefung haben, wobei die Innenkontur der Nut der Außenkontur des Formteils entspricht. Dadurch ergibt sich eine Verriegelung zwischen Formteil und Nut gegen eine Drehbewegung, so daß das Formteil in seiner Längsrichtung in die Nut einzuschieben ist, wenn es in dem Induktor montiert wird. Es genügt ein einziger Längsvorsprung oder auch eine einzige äußere Längsvertiefung des Formteils, um diese Art der Montage zu realisieren.

An mindestens einem Längsende kann die Metallschale mit einem Anschlußelement für den Erdleiter versehen sein. Dies kann beispielsweise eine metallene Anschlußfahne sein, mit der der Erdleiter z.B. verschweißt, verklemmt oder verschraubt werden kann. Da eine solche Anschlußfahne nicht auch gleichzeitig als Montageelement für die Leitungen der Wechselstromwicklung dient, kann an dieser Stelle ein korrosionsbeständiger Anschluß hergestellt werden.

Die Metallschale besteht zweckmäßig aus Stahl, vorzugsweise aus Edelstahl. Durch geeignete Materialwahl ist optimale Korrosionsbeständigkeit auch der Verbindung zwischen Metallschale und leitendem Außenmantel der Leitung gewährleistet.

Mehrere Metallschalen können über ihre Anschlußelemente mit einem sie verbindenden Erdleiter fest verbunden eine in die Nuten eines Induktors einsetzbare Montageeinheit bilden. Eine solche Montageeinheit kann in einem einzigen Stanzvorgang aus Edelstahlblech gefertigt werden. Sie ermöglicht eine besonders schnelle Montage einer Vielzahl von Metallschalen in den Nuten eines Induktors.

Ein Ausführungsbeispiel einer Vorrichtung nach der Erfindung wird im folgenden an Hand der Zeichnungen näher erläutert. Darin zeigen:
- Fig. 1: eine schematisch-perspektivische Darstellung des Induktors eines Linearmotors mit einer Dreiphasen-Wechselstromwicklung,
- Fig. 2: perspektivisch eine einzelne Nut des Induktors mit darin enthaltener Metallschale,
- Fig. 3: den Querschnitt einer Metallschale mit darin gehaltener Leitung in einer Nut eines Induktors,
- Fig. 4: den Querschnitt einer Metallschale in der Nut eines Induktors,
- Fig. 5: ein in einen Induktor eingesetztes Formteil zur Aufnahme einer Leitung, und
- Fig. 6: mehrere Metallschalen als Montageeinheit.

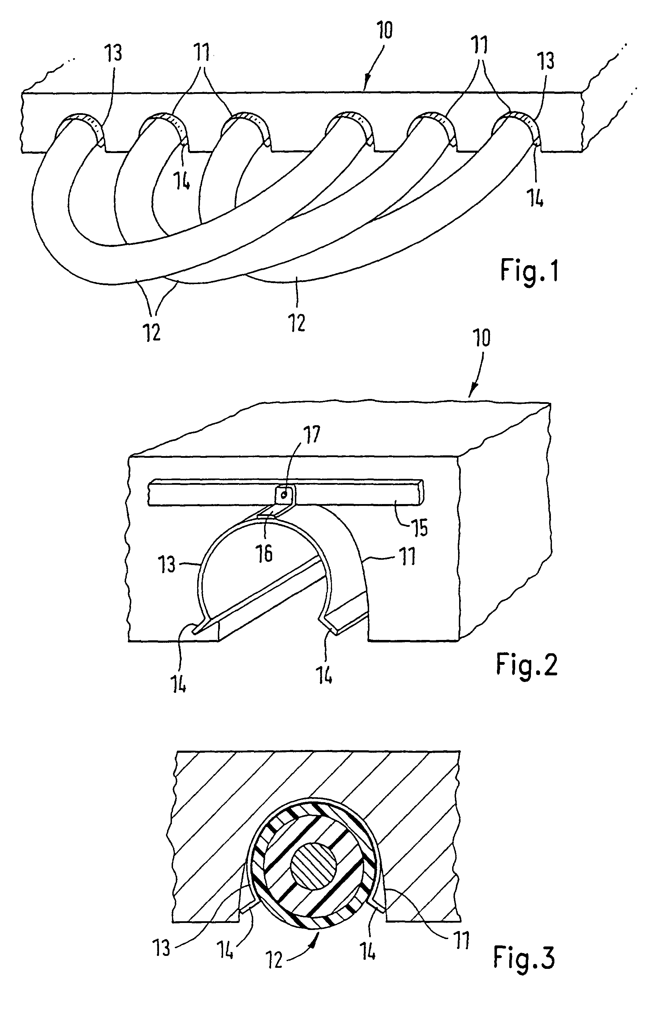

In Fig. 1 ist ein Abschnitt des Induktors 10 eines Linearmotors dargestellt, in dessen Nuten 11 die Stränge 12 einer Dreiphasen-Wechselstromwicklung liegen. Diese Stränge bestehen aus isolierten elektrischen Leitungen mit einem Mantel aus einem elektrisch schwach leitfähigen Werkstoff, der z.B. eine elektrisch leitfähige Gummimischung sein kann.

Die Wicklungsstränge 12 sind in den Nuten 11 des Induktors 10 mit Metallschalen 13 gehalten, die jeweils eine Leitung über mehr als die Hälfte ihres Umfangs umschließen und in den Nuten 11 unbeweglich festsitzen. Hierzu haben die Metallschalen 13 umgebogene Längskanten 14 an ihrer Längsöffnung, und diese Längskanten 14 sind so bemessen und abgewinkelt, daß sie nach dem Eindrücken der jeweiligen Metallschale 13 in die Nut in deren Aussparungen verspreizt sind und selbsttätig nicht mehr herausfallen können. Da die Metallschale 13 einen Innendurchmesser hat, der geringfügig kleiner als der Außendurchmesser des Stranges 12 ist, wird sie beim Einlegen der Leitung leicht auseinandergedrückt, so daß sie bereits dann infolge ihrer Elastizität die Leitung fest umschließt und mit deren leitfähigem Außenmantel eine gute elektrische Verbindung eingeht. Die Metallschale 13 kann dann z.B. mit einer Anschlußfahne, die über die jeweilige Nut 11 hinausragt, relativ einfach mit einem Erdleiter verbunden werden, der an dem Induktor im Bereich der Metallschalen 13 entlanggeführt ist. Die Anschlußfahne kann auch direkt an Erdpotential angeschlossen werden.

In Fig. 2 ist ein solcher Erdleiter 15 dargestellt. Die Figur zeigt einen Teil des Induktors 10 in vergrößerter Darstellung mit einer Nut 11, in die eine Metallschale 13 eingesetzt ist. Dabei sind die beiden Kanten 14 der Metallschale 13 an den Innenwänden der Nut 11 verspreizt, so daß die Metallschale 13 in der Nut 11 festsitzt. Die Metallschale 13 steht aus der Nut 11 hervor und ist an ihrer Oberseite mit einer Anschlußfahne 16 versehen, die z.B. an ihr verschweißt sein kann. Diese Anschlußfahne 16 ist bei 17 mit dem Erdleiter 15 elektrisch verbunden, beispielsweise verschraubt oder verschweißt. Ist der Erdleiter 15 seinerseits an dem Induktor 10 befestigt, so ergibt sich durch die Verbindung der Metallschale 13 mit dem Erdleiter 15 an der Stelle 17 neben der elektrischen Verbindung auch eine zusätzliche mechanische Befestigung der Metallschale 13 in dem Induktor 10.

Es ist natürlich auch möglich, den jeweiligen Strang 12 in die Metallschale 13 nach deren Montage im Induktor 10 einzudrücken, weil die Elastizität der Leitung dies erlaubt. Ferner kann die Metallschale 13 auch kürzer als die Nut 11 sein, so daß die Anschlußfahne 16 dann in die Nut 11 hineingeführt ist.

Fig. 3 zeigt die Schnittdarstellung der in Fig. 2 gezeigten Anordnung mit dem Strang 12 einer Leitung, jedoch ohne die elektrische Verbindung der Metallschale 13 mit einem Erdleiter. Wiederum ist zu erkennen, daß die Metallschale 13 den Strang 12 über mehr als die Hälfte ihres Außenumfangs umgibt und an ihrer Öffnung nach außen gebogene Längskanten 14 hat, die an der Innenwand der Nut 11 festsitzen, so daß die Metallschale 13 mit der in ihr gehaltenen Leitung in der Nut 11 festsitzt. Es ist ferner zu erkennen, daß die Metallschale 13 eine großflächige elektrische Verbindung mit dem Außenmantel der Leitung gewährleistet.

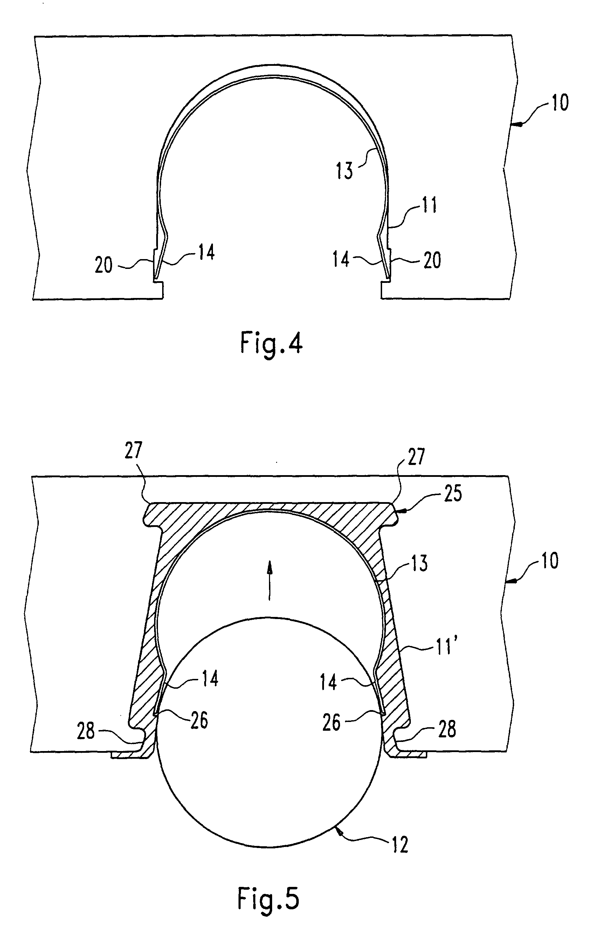

Fig. 4 zeigt zwei Längsvertiefungen 20 an der rechten und der linken Innenwand der Nut 11 des Induktors 10. Die Metallschale 13 ist mit ihren Längskanten 14 in diesen Längsvertiefungen 20 verrastet. Auch hier wird eine in Fig. 4 nicht gezeigte Leitung durch die Federelastizität der Metallschale 13 ggf. in Verbindung mit ihrer eigenen Nachgiebigkeit gehalten.

Fig. 5 zeigt eine Art der Leitungsbefestigung, die nur auf der Nachgiebigkeit des Leitungsmaterials beruht. In die Nut 11' des Induktors 10 ist ein Formteil 25 eingesetzt, das z.B. ein Kunststoff-Spritzteil sein kann. Es hat obere Längsvorsprünge 27 und untere Längsvertiefungen 28, die eine Außenkontur bilden, der die Innenkontur der Nut 11' angepaßt ist, so daß das Formteil 25 in seiner Längsrichtung in die Nut 11' einzuschieben ist und dann in ihr unverdrehbar festsitzt.

Nahe seiner Öffnung hat das Formteil 25 auf beiden Seiten innere Längskanten 26, an denen die nach außen gebogenen Längskanten 14 der Metallschale 13 verrasten, wenn diese in das Formteil 25 eingeführt wird. Sie muß nicht unbedingt aus federelastischem Material bestehen, jedoch begünstigt dies den festen Sitz der Metallschale 13 in dem Formteil 25.

Schematisch ist in Fig. 5 auch der Strang 12 einer elektrischen Leitung dargestellt, die in der dargestellten Pfeilrichtung von unten in das Formteil 25 hineinzudrücken ist und dann in diesem festsitzt. Dabei wird das nachgiebige Leitungsmaterial zusammengedrückt, kann sich aber wieder dehnen, wenn der Strang 12 seine Endposition in der Metallschale 13 eingenommen hat.

Vorteilhaft ist die Leitung hierzu an ihrer Außenseite mit einer gleitfähigen, elektrisch leitenden Beschichtung versehen.

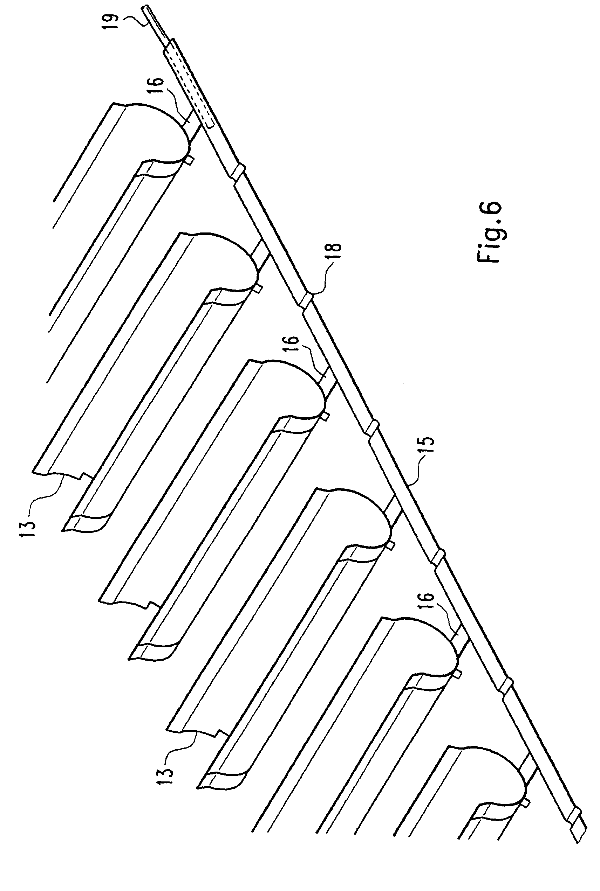

Fig. 6 zeigt eine Montageeinheit, die aus mehreren Metallschalen 13, an ihnen vorgesehenen Anschlußfahnen 16 und einem diese verbindenden Erdleiter 15 bestehen. Dieser hat gekröpfte Stellen 18, die zum Ausgleich von Abstandstoleranzen der Nuten im Induktor dienen, und ist mit einem Kabel 19 verbunden, das an Erdpotential anzuschließen ist.

## Patentansprüche

1. Vorrichtung zum Verbinden des elektrisch leitfähigen Mantels einer in die Nuten des Induktors eines Linearmotors eingelegten elektrischen Leitung mit einem Erdleiter, **gekennzeichnet durch** eine die Leitung (12) im Nutbereich über mehr als den halben Außenumfang umschließende Metallschale (13), deren Innendurchmesser geringfügig kleiner als der Außendurchmesser der Leitung (12) ist und die in der jeweiligen Nut (11) liegend am Induktor (10) befestigbar ist.

2. Vorrichtung nach Anspruch 1, **dadurch gekennzeichnet, daß** die Metallschale (13) federelastisch ist und nach außen gebogene Längskanten (14) hat, deren Breite und Biegungswinkel so bemessen sind, daß sie sich beim Eindrücken in die Nut (11) an deren Innenwänden verspreizen.

3. Vorrichtung nach Anspruch 2, **dadurch gekennzeichnet, daß** die Innenwände der Nut (11) Längsvertiefungen (20) zur Aufnahme der Längskanten (14) der Metallschale (13) haben.

4. Vorrichtung nach einem der vorhergehenden Ansprüche, **dadurch *gekennzeichnet,* daß** die Außenkontur der Metallschale (13) der Innenkontur der Nut (11) entspricht.

5. Vorrichtung nach einem der vorhergehenden Ansprüche, **dadurch gekennzeichnet, daß** die Nut (11) mit einem Kunststoff ausgekleidet ist.

6. Vorrichtung nach Anspruch 5, **gekennzeichnet durch** ein die Metallschale (13) aufnehmendes, in die Nut (11') einsetzbares und in dieser befestigbares Formteil (25), dessen Innenkontur der Außenkontur der Metallschale (13) entspricht.

7. Vorrichtung nach Anspruch 5 oder 6, **dadurch gekennzeichnet., daß** die Metallschale (13) nach außen gebogene Längskanten (14) hat, die an inneren Längskanten (26) der Auskleidung bzw. des Formteils (25) verrasten.

8. Vorrichtung nach Anspruch 6 oder 7, **dadurch gekennzeichnet, daß** das Formteil (25) mindestens einen äußeren Längsvorsprung (27) und/oder mindestens eine äußere Längsvertiefung (28) hat, und daß die Innenkontur der Nut (11') der Außenkontur des Formteils (25) entspricht.

9. Vorrichtung nach einem der vorhergehenden Ansprüche, **dadurch gekennzeichnet, daß** die Metallschale (13) an mindestens einem Längsende ein Anschlußelement (16) für den Erdleiter (15) hat.

10. Vorrichtung nach Anspruch 9, **dadurch gekennzeichnet, daß** das Anschlußelement eine metallene Anschlußfahne (16) ist.

11. Vorrichtung nach einem der vorhergehenden Ansprüche, **dadurch gekennzeichnet, daß** die Metallschale (13) aus Stahl, vorzugsweise aus Edelstahl, besteht.

12. Vorrichtung nach einem der Ansprüche 9 bis 11, **dadurch gekennzeichnet, daß** mehrere Metallschalen (13) über ihre Anschlußelemente (16) mit einem sie verbindenden Erdleiter (15) fest verbunden eine in die Nuten (11) eines Induktors (10) einsetzbare Montageeinheit bilden.

## Claims

1. Device for connecting to a grounding conductor the electrically conductive sheath of an electric lead laid in the slots of the inductor of a linear motor, **characterized by** a metal shell (13), which encloses more than half the outer circumference of the lead (12) in the slot region, whose inside diameter is slightly smaller than the outside diameter of the lead (12), and which can be fastened in the respective slot (11) in a fashion lying against the inductor (10).

2. Device according to claim 1, **characterized in that** the metal shell (13) is resilient and has outwardly bent longitudinal edges (14) whose width and angle of curvature are dimensioned such that when pressed into the slot (11) they spread against the inner walls thereof.

3. Device according to claim 2, **characterized in that** the inner walls of the slot (11) have longitudinal depressions (20) for holding the longitudinal edges (14) of the metal shell (13).

4. Device according to one of the preceding claims, **characterized in that** the outer contour of the metal shell (13) corresponds to the inner contour of the slot (11).

5. Device according to one of the preceding claims, **characterized in that** the slot (11) is lined with a plastic material.

6. Device according to claim 5, **characterized by** a moulded component (25), which holds the metal shell (13), can be inserted into the slot (11') and can be fastened therein, and whose inner contour corresponds to the outer contour of the metal shell (13).

7. Device according to claim 5 or 6, **characterized in that** the metal shell (13) has outwardly bent longitudinal edges (14) which latch on internal longitudinal edges (26) of the lining or of the moulded component (25).

8. Device according to claim 6 or 7, **characterized in that** the moulded component (25) has at least one outer longitudinal projection (27) and/or at least one outer longitudinal depression (28), and **in that** the inner contour of the slot (11') corresponds to the outer contour of the moulded component (25).

9. Device according to one of the preceding claims, **characterized in that** the metal shell (13) has a connecting element (16) for the grounding conductor (15) on at least one longitudinal end.

10. Device according to claim 9, **characterized in that** the connecting element is a metal connecting tab (16).

11. Device according to one of the preceding claims, **characterized in that** the metal shell (13) consists of steel, preferably of stainless steel.

12. Device according to one of claims 9 to 11, **characterized in that** a plurality of metal shells (13), permanently connected via their connecting elements (16) to a grounding conductor (15) connecting them, form a mounting unit which can be inserted into the slots (11) of an inductor (10).

## Revendications

1. Dispositif pour relier la gaine élèctroconductrice d'un conducteur électrique inséré dans les encoches de la bobine d'induction d'un moteur électrique linéaire à un conducteur de mise à la terre, **caractérisé par** une enveloppe métallique (13) entourant le conducteur (12) dans la région de l'encoche sur plus de la moitié de la périphérie extérieure, l'enveloppe métallique ayant un diamètre intérieur légèrement inférieur au diamètre extérieur du conducteur (12) et pouvant être fixée dans l'encoche correspondante (11) ménagée dans la bobine d'induction (10).

2. Dispositif selon la revendication 1, **caractérisé en ce que** l'enveloppe métallique (13) est élastique et comporte des bords longitudinaux (14) pliés vers l'extérieur dont la largeur et l'angle de pliage sont dimensionnés de sorte que, lors de l'introduction par pression dans l'encoche (11), les bords s'écartent contre les parois intérieures de celle-ci.

3. Dispositif selon la revendication 2, **caractérisé en ce que** les parois intérieures de l'encoche (11) comportent des évidements longitudinaux (20) pour recevoir les bords longitudinaux (14) de l'enveloppe métallique (13).

4. Dispositif selon l'une des revendications précédentes, **caractérisé en ce que** le contour extérieur de l'enveloppe métallique (13) correspond au contour intérieur de l'encoche (11).

5. Dispositif selon l'une des revendications précédentes, **caractérisé en ce que** l'encoche (11) est dotée d'une garniture en matière plastique.

6. Dispositif selon la revendication 5, **caractérisé par** une pièce préformée (25) qui reçoit l'enveloppe métallique (13), qui peut être insérée dans l'encoche (11') et fixée dans celle-ci et dont le contour intérieur correspond au contour extérieur de l'enveloppe métallique (13).

7. Dispositif selon la revendication 5 ou 6, **caractérisé en ce que** l'enveloppe métallique (13) comporte des bords longitudinaux (14) pliés vers l'extérieur, lesquels s'encliquettent au niveau des bords longitudinaux intérieurs (26) de la garniture ou de la pièce préformée (25).

8. Dispositif selon la revendication 6 ou 7, **caractérisé en ce que** la pièce préformée (25) comporte au moins une saillie longitudinale extérieure (27) et/ou au moins un évidement longitudinal extérieur (28), et **en ce que** le contour intérieur de l'encoche (11') correspond au contour extérieur de la pièce préformée (25).

9. Dispositif selon l'une des revendications précédentes, **caractérisé en ce que** l'enveloppe métallique (13) comporte au niveau d'au moins une extrémité longitudinale un élément de raccordement (16) pour le conducteur de mise à la terre (15).

10. Dispositif selon la revendication 9, **caractérisé en ce que** l'élément de raccordement est une barrette de raccordement métallique (16).

11. Dispositif selon l'une des revendications précédentes, **caractérisé en ce que** l'enveloppe métallique (13) est en acier, de préférence en acier fin.

12. Dispositif selon l'une des revendications 9 à 11, **caractérisé en ce que** plusieurs enveloppes métalliques (13), attachées rigidement par leurs éléments de raccordement (16) à un conducteur de mise à la terre (15) qui les relient, forment une unité de montage insérable dans les encoches (11) d'une bobine d'induction (10).
